# EUROPEAN PATENT SPECIFICATION

(11) **EP 4 567 737 B1**
(45) Date of publication and mention of the grant of the patent: **07.10.2026**
(21) Application number: 24214319.6
(22) Date of filing: 20.11.2024
(51) Int. Cl.: G06T 15/60, G06T 15/20, G06T 15/08, G06T 17/00

(54) **HETEROGENEOUS THREE-DIMENSIONAL MULTI-OBJECT FUSION RENDERING METHOD, DEVICE, AND SYSTEM**
HETEROGENES DREIDIMENSIONALES MEHROBJEKTFUSIONSDARSTELLUNGSVERFAHREN, VORRICHTUNG UND SYSTEM
PROCÉDÉ, DISPOSITIF ET SYSTÈME DE RENDU PAR FUSION MULTI-OBJETS TRIDIMENSIONNELS HÉTÉROGÈNES

(30) Priority: 05.12.2023 CN 202311654456
(43) Date of publication of application: 11.06.2025
(73) Proprietor: Chengdu Sobey Digital Technology Co., Ltd, Chengdu, Sichuan 610041 (CN)
(72) Inventor: CHEN, Yaosen, Chengdu, 610041 (CN); YUAN, Qi, Chengdu, 610041 (CN); WEN, Xuming, Chengdu, 610041 (CN)
(74) Representative: Murgitroyd & Company

(56) References cited:
- WANG ZIAN ET AL: "Neural Fields Meet Explicit Geometric Representations for Inverse Rendering of Urban Scenes", 2023 IEEE/CVF CONFERENCE ON COMPUTER VISION AND PATTERN RECOGNITION (CVPR), IEEE, 17 June 2023 (2023-06-17), pages 8370 - 8380, XP034401825, DOI: 10.1109/CVPR52729.2023.00809
- RUDNEV VIKTOR ET AL: "NeRF for Outdoor Scene Relighting", COMPUTER VISION - ECCV 2022: 17TH EUROPEAN CONFERENCE, TEL AVIV, ISRAEL, OCTOBER 23-27, 2022, PROCEEDINGS, PART XVI, 23 October 2022 (2022-10-23), pages 615 - 631, XP047637006

## Description

### TECHNICAL FIELD

The present disclosure relates to the technical field of computer vision and graphics, and more specifically, to a heterogeneous three-dimensional multi-object fusion rendering method, device, and system.

### BACKGROUND

A geometric model of an object or a scene obtained through modeling may be imported into a rendering engine to produce various cool three-dimensional presentation applications. However, when rendering, the model obtained by reconstructing the objects or the scene does not have sufficiently high fidelity or consumes huge computing and storage resources due to the large number of facets required, thus affecting the realistic rendering of the three-dimensional scene. In recent years, research on three-dimensional scene and object representation methods based on neural radiance field (NeRF) has made great progress in various applications, especially an end-to-end scene optimization strategy thereof, which can render the details of three-dimensional objects and scenes with sufficient fidelity.

However, this implicit three-dimensional object and scene representation method based on neural radiance field cannot be directly adapted to traditional rendering engines (such as Unreal Engine (UE)), which limits the application of this advanced three-dimensional representation method. Therefore, how to combine the authenticity of neural radiance field and the real-time operability of traditional rendering engines has become a problem that urgently needs to be resolved.

Wang Zian et al:Neural Fields Meet Explicit Geometric Representations for Inverse Rendering of Urban Scenes", 2023 IEEE/CVF CONFERENCE ON COMPUTER VISION AND PATTERN RECOGNITION (CVPR), IEEE, 17 June 2023 (2023-06-17), pages 8370-8380, XP034401825 discloses technology related to the claims.

### SUMMARY

To overcome the defects in the existing technology, the present disclosure provides a heterogeneous three-dimensional multi-object fusion rendering method, device, and system, which solves the problem of poor authenticity and real-time effects of current three-dimensional multi-object or scene fusion rendering, and promotes the implementation of neural rendering technology.

The objective of the present disclosure is achieved through the following solutions.

According to the present invention, there is provided aheterogeneous three-dimensional multi-object fusion rendering method as claimed in claim 1.

Further, in the step S4, synthesizing a picture rendered in the rendering engine and a picture rendered by the neural radiance field includes the following substeps:
S41. importing the new view angle of the three-dimensional object or scene generated in the rendering of the neural radiance field in the step S2 into the rendering engine scene;
S42. synthesizing the image and the depth information rendered by the rendering engine with the image and the depth information rendered by the neural radiance field; and
S43. performing color adjustment and color space conversion on the entire scene and the three-dimensional object or scene in the rendering of the rendering engine.

Further, in the step S41, importing the new view angle of the three-dimensional object or scene generated in the rendering of the neural radiance field in the step S2 into the rendering engine scene includes the following steps:
extending a rendering system of the rendering engine, such that a rendering result obtained in the step S2 is imported into the entire rendering process of the rendering engine;
extending nDisplay to enable the nDisplay to support rendering of different scenes and to enable the nDisplay to perform distributed forwarding of reconstruction data information and the new view angle of the neural radiance field; wherein the nDisplay is a multi-screen projection technology plug-in based on the rendering;
extending Composite to enable the Composite to perform image layered overlay or high-order lighting and occlusion processing; wherein the Composite is a multi-layer overlay synthesis rendering plug-in based on the rendering;
establishing a management module ANeRFActor to complete the following functions: forwarding original image data to a neural radiance field reconstruction module; then, forwarding the rendering result to the rendering engine or the nDisplay to distribute to child nodes; wherein the management module ANeRFActor includes a media component, receives the image through the media component, and sends the image to the neural radiance field reconstruction module to reconstruct the implicit representation model; and finally, distributing representation model data through the nDisplay, wherein the neural radiance field reconstruction module is a module for reconstructing the three-dimensional object or scene by using the neural radiance field, and the representation model data is data of an actual representation model of the three-dimensional object or scene.

Further, in the step S42, synthesizing the image and the depth information rendered by the rendering engine with the image and the depth information rendered by the neural radiance field includes the following substeps:
during synthesis, comparing the depth information rendered by the rendering engine with the depth information obtained by the rendering of the neural radiance field, and selecting a point closer to a virtual camera in front of the field of view; and synthesizing a final image through layered overlay of the images as an output.

A heterogeneous three-dimensional multi-object fusion rendering device includes a processor and a memory, wherein the memory stores a computer program which, when executed by the processor, causes the processor to perform the method according to any one of the above aspects.

A heterogeneous three-dimensional multi-object fusion rendering system includes the heterogeneous three-dimensional multi-object fusion rendering device.

The present disclosure has the following beneficial effects.

According to the present disclosure, by collecting multiple views of a real three-dimensional object or scene, the three-dimensional object or scene is subjected to implicit representation by using neural radiance field to obtain a rough geometric model, the implicit representation model is imported into the neural radiance field renderer for rendering, and the model is imported into the UE by extending the module function of the UE, so that this model can be synthesized, interacted, and edited with the UE scene, thereby achieving three-dimensional fusion rendering of multiple objects or scenes.

The present disclosure can achieve the real and real-time three-dimensional fusion rendering of multiple objects or scenes.

Compared with the traditional rendering mode, one of the improvements of the solution of the embodiment in the present disclosure for achieving three-dimensional multi-object or scene fusion rendering is to render more vivid three-dimensional objects and scenes by using the neural radiance field.

Compared with other three-dimensional rendering methods based on the neural radiance field, one of the improvements of the solution of the embodiment in the present disclosure is to achieve the derivation, synthesis, interaction and editing of the three-dimensional object or scene generated by the neural radiance field.

By converting the implicit representation model rendered by the neural radiance field into a display representation model and combining UE to edit the three-dimensional object or scene, the fusion rendering of the traditional three-dimensional representation method and the neural radiance field-based representation method is achieved. Therefore, the problem that the implicit three-dimensional object and scene representation method based on the neural radiance field cannot be directly adapted to the traditional rendering engine is solved, the authenticity and real-time performance of the three-dimensional multi-object or scene rendering are improved, and the implementation of neural rendering technology is promoted.

### BRIEF DESCRIPTION OF DRAWINGS

To describe the technical solutions in embodiments of the present disclosure or in the conventional technology more clearly, the following briefly describes the accompanying drawings for describing embodiments or the conventional technology. It is clear that the accompanying drawings in the following description show merely some embodiments of the present disclosure, and those of ordinary skill in the art may still derive other drawings from these accompanying drawings without creative efforts.
FIG. 1 is a schematic flowchart of a heterogeneous three-dimensional multi-object fusion rendering method according to an embodiment of the present disclosure;
FIG. 2 is a schematic diagram of a framework based on UE extension function according to an embodiment of the present disclosure; wherein,
   UnrealPak is an engine tool for packing resources by an unreal engine to achieve game generation;
   UnrealLightmass is an engine tool for creating light maps with complex light interactions by an unreal engine;
   UnrealInsight is an analysis system integrated with an unreal engine and used to collect, analyze, and display data emitted by the engine;
   Nigara is a graphical programming language and editor for creating advanced visual effects and particle systems;
   PixelStreaming is a function of an unreal engine that allows real-time streaming of images and content from unreal engine applications (usually games or interactive applications) to terminal devices on the network; nDisplay is a multi-screen projection technology plug-in based on Unreal Engine;
   AJA is a hardware device and a matching plug-in thereof used to capture external video signals and transmit the external video signals to the computer;
   Composite is a multi-layer overlay synthesis rendering plug-in based on Unreal Engine;
   DirectX is a set of multimedia and graphics application programming interfaces developed by Microsoft Corporation;
   Vulkan is a cross-platform graphics and compute application programming interface that provides graphics rendering and computing power;
   OpenGL is a cross-platform graphical programming interface for developing 2D and 3D graphical applications;
   Havok is an integrated toolset for high-quality physics effect, animation, artificial intelligence, and destruction effect;
   PhysX is a physics engine used to simulate and present physical effects in computer games, simulations, virtual reality, and film and television special effects;
   ODE is a physics engine used for simulation and to simulate the dynamic behavior and physical effects of objects;
   Conductor is a component used to coordinate and manage a plurality of computing tasks or processes;
   Windows is an operating system for personal computers developed by Microsoft Corporation;
   Linux is an open source operating system kernel designed for use in various computing devices such as computer systems, servers, mobile devices, and embedded systems;
   OSX is an operating system developed by Apple Inc. for Apple computers;
   PS is a family of home game consoles developed and manufactured by Sony Interactive Entertainment, and refers herein to the operating system used by this family of home game consoles;
   XBox is a brand of home game consoles developed and manufactured by Microsoft Corporation, and refers herein to the operating system used by the home game console;
   iOS is a mobile operating system developed by Apple Inc. for running Apple's mobile devices;
   Android is a mobile operating system developed by Google Inc. for mobile devices;

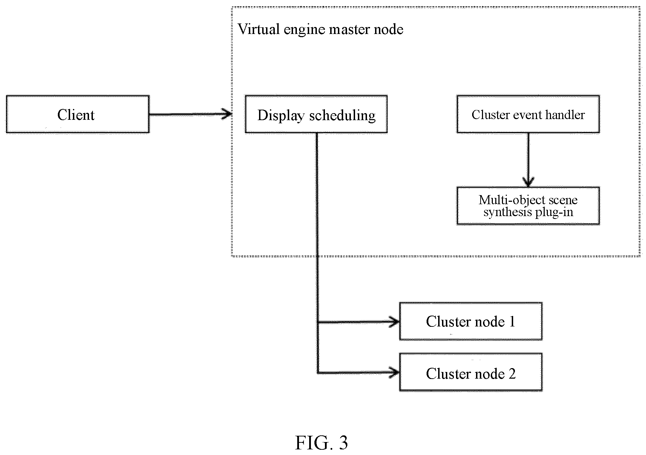

FIG. 3 is a schematic diagram of command and data distribution for extending nDisplay according to an embodiment of the present disclosure;

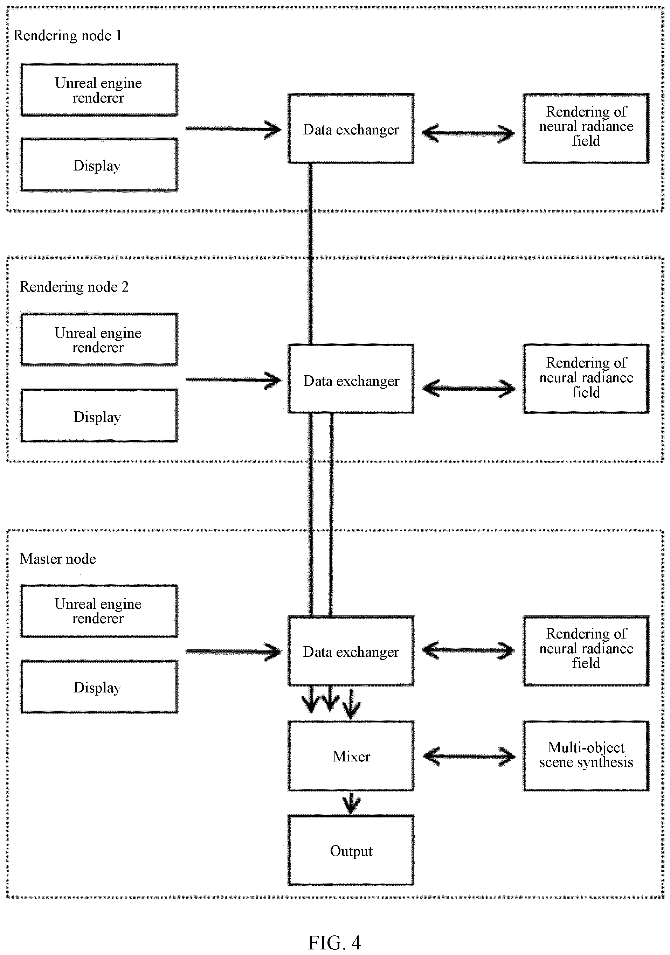

FIG. 4 is a schematic diagram of multi-node layered rendering for extending Composite according to an embodiment of the present disclosure;

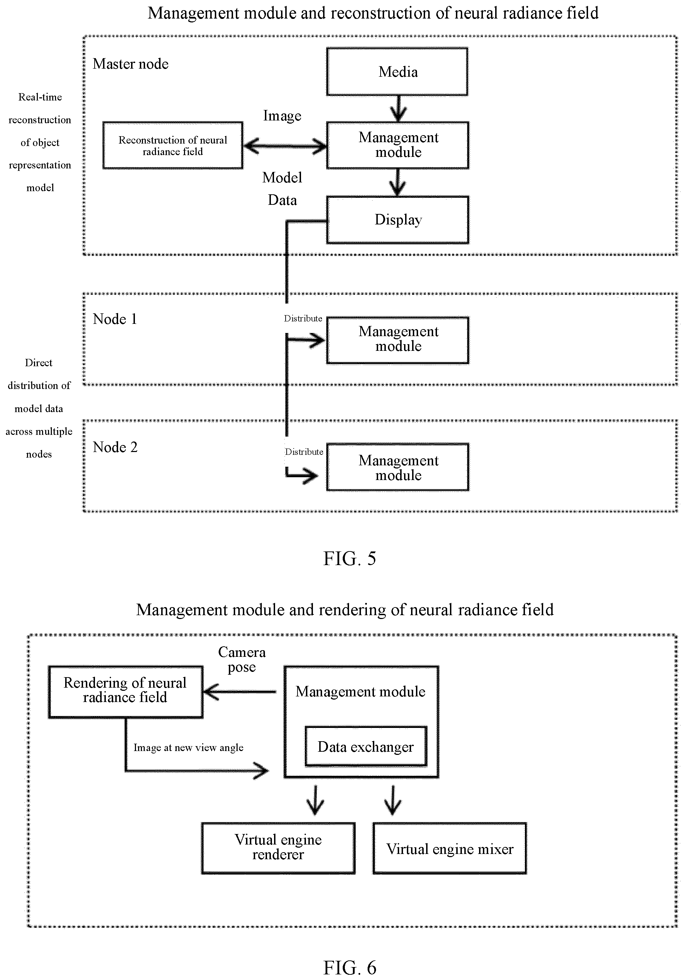

FIG. 5 is a schematic diagram of the relationship between the reconstruction of neural radiance field and ANeRFActor according to an embodiment of the present disclosure; and
FIG. 6 is a schematic diagram of the relationship between the rendering of neural radiance field and ANeRFActor according to an embodiment of the present disclosure.

### DETAILED DESCRIPTION

All features disclosed in all embodiments in this specification, or steps in all methods or processes implicitly disclosed, except for mutually exclusive features and/or steps, can be combined and/or expanded or replaced in any manner.

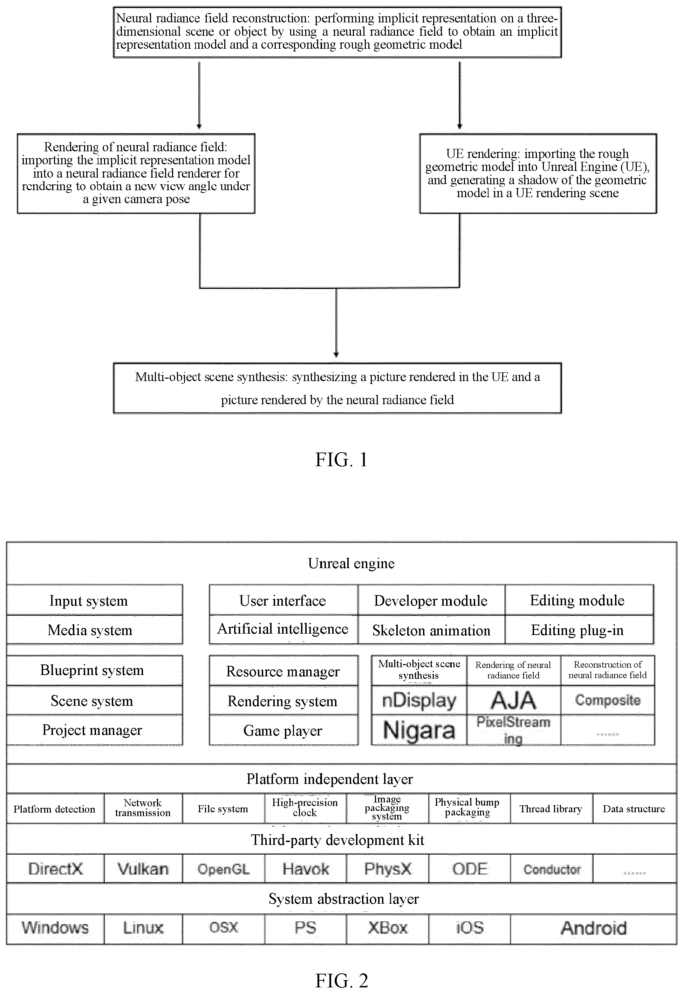

As shown in FIG. 1, a heterogeneous three-dimensional multi-object fusion rendering method includes the following steps:
S1. Neural radiance field reconstruction: performing implicit representation on a three-dimensional scene or object by using a neural radiance field to obtain an implicit representation model and a corresponding rough geometric model.
S2. Rendering of neural radiance field: importing the implicit representation model into a neural radiance field renderer for rendering to obtain a new view angle under a given camera pose.
S3. UE rendering: importing the rough geometric model into Unreal Engine (UE), and generating a shadow of the geometric model in the UE scene.
S4. Multi-object scene synthesis: synthesizing a picture rendered in the UE and a picture rendered by the neural radiance field.

The step S1 includes the following substeps: for a unified real three-dimensional object or scene, taking photos at a plurality of angles to obtain multiple views; then obtaining an implicit representation model of the three-dimensional object or scene by optimizing the network of the neural radiance field; and deriving an explicit representation file of the three-dimensional object or scene through a post-processing algorithm.

The step S2 includes the following substeps: calculating start coordinates and a direction of light required by the rendering of the neural radiance field according to a relative pose of the display representation file of the three-dimensional object or the scene derived in the step S1 in the entire virtual scene of the UE and the pose of the camera in the virtual scene of the UE; and obtaining corresponding picture and depth information according to the start coordinates and the direction of the light.

The step S3 includes the following substeps: setting the scene, lighting and other objects in a UE rendering engine; guiding the rough geometric model generated by the neural radiance field into the UE scene; producing the shadow of the geometric model in the UE scene by using the rendering mode of the UE; and hiding the geometric model generated by the neural radiance field.

In an actual application process, the step S4 includes the following substeps:
S41. importing the new view angle of the three-dimensional object or scene generated in the rendering of the neural radiance field in the step S2 into the UE scene;
S42. synthesizing the image and the depth information rendered by the UE with the image and the depth information rendered by the neural radiance field; and
S43. performing color adjustment, color space conversion and other image feature modifications on the entire scene and the three-dimensional object or scene in the UE rendering.

In an actual application process, according to the step S41, importing the new view angle of the three-dimensional object or scene generated in the rendering of the neural radiance field in the step S2 into the UE scene includes the following substeps: as shown in FIG. 2,
extending a rendering system of the UE, such that a rendering result obtained in the step S2 is imported into the entire rendering process of the UE;
as shown in FIG. 3, extending nDisplay to enable the nDisplay to support rendering of different scenes and to enable the nDisplay to perform distributed forwarding of the neural radiance field reconstruction data information, the new view angle and other information;
as shown in FIG. 4, extending Composite to enable the Composite to perform image layered overlay or high-order lighting and occlusion processing; and
as shown in FIGs. 5 and 6, establishing a management module ANeRFActor to complete the following functions: forwarding original image data to a neural radiance field reconstruction module; forwarding the rendering result to the UE rendering engine or the nDisplay to distribute to child nodes; wherein the management module includes a media component, receives the image through the media component, and sends the image to the neural radiance field reconstruction module to reconstruct the object representation model; and distributing representation model data through the nDisplay when there are multiple nodes in the same project.

In an actual application process, according to the step S42, synthesizing the image and the depth information rendered by the UE with the image and the depth information rendered by the neural radiance field includes the following substeps: during synthesis, comparing the depth information rendered by the UE with the depth information obtained by the rendering of the neural radiance field, and selecting a point closer to a virtual camera in front of the field of view; and synthesizing a final image through layered overlay of the images as an output.

In an actual application process, the present disclosure further provides a heterogeneous three-dimensional multi-object fusion rendering device, including a processor and a memory, wherein the memory stores a computer program which, when executed by the processor, causes the processor to perform the method according to any one of the above aspects.

In an actual application process, the present disclosure further provides a heterogeneous three-dimensional multi-object fusion rendering system, which includes the heterogeneous three-dimensional multi-object fusion rendering driving device.

## Claims

1. A heterogeneous three-dimensional multi-object fusion rendering method, comprising the following steps:
S1. neural radiance field reconstruction: performing implicit representation on a three-dimensional scene or object by using a neural radiance field to obtain an implicit representation model and a corresponding rough geometric model;
S2. rendering of neural radiance field: importing the implicit representation model into a neural radiance field renderer for rendering to obtain a new view angle under a given camera pose, wherein the neural radiance field renderer is a module that obtains the implicit representation model using the three-dimensional object or scene reconstructed by the neural radiance field, and then renders the implicit representation model in volume-based rendering;
S3. rendering: importing the rough geometric model into a rendering engine, and generating a shadow of the geometric model in a rendering scene;
S4. multi-object scene synthesis: synthesizing a picture rendered in the rendering engine and a picture rendered by the neural radiance field; wherein:
in the step S1, performing implicit representation on a three-dimensional scene or object by using a neural radiance field to obtain an implicit representation model and a corresponding rough geometric model comprises the following substeps:
for a unified real three-dimensional object or scene, taking photos at a plurality of angles to obtain multiple views; then obtaining an implicit representation model of the three-dimensional object or scene by optimizing the network of the neural radiance field; finally, deriving an explicit representation file of the three-dimensional object or scene as a rough geometric model through a post-processing algorithm, wherein the optimization of the neural radiance field is achieved by optimizing a neural network for representing the three-dimensional object or scene by back propagation;
in the step S2, importing the implicit representation model into a neural radiance field renderer for rendering to obtain a new view angle under a given camera pose comprises the following substeps:
calculating start coordinates and a direction of light required by the rendering of the neural radiance field according to a relative pose of the display representation file of the three-dimensional object or the scene derived in the step S1 in the entire virtual scene of the rendering engine and the pose of the camera in the virtual scene of the rendering engine; and then obtaining corresponding picture and depth information according to the start coordinates and the direction of the light,
**characterized in that** in step S3, importing the rough geometric model into a rendering engine, and generating a shadow of the geometric model in a rendered scene comprises the following substeps:
setting the scene and lighting in the rendering engine; importing the rough geometric model generated by the neural radiance field into the rendering engine scene; then producing the shadow of the geometric model in the rendering engine scene by using the rendering mode of the rendering engine; and finally hiding the geometric model generated by the neural radiance field, wherein the rendering mode is a rasterization rendering mode.

2. The heterogeneous three-dimensional multi-object fusion rendering method according to claim 1, wherein in the step S4, synthesizing a picture rendered in the rendering engine and a picture rendered by the neural radiance field comprises the following substeps:
S41. importing the new view angle of the three-dimensional object or scene generated in the rendering of the neural radiance field in the step S2 into the rendering engine scene;
S42. synthesizing the image and the depth information rendered by the rendering engine with the image and the depth information rendered by the neural radiance field; and
S43. performing color adjustment and color space conversion on the entire scene and the three-dimensional object or scene in the rendering of the rendering engine.

3. The heterogeneous three-dimensional multi-object fusion rendering method according to claim 2, wherein:
in the step S41, importing the new view angle of the three-dimensional object or scene generated in the rendering of the neural radiance field in the step S2 into the rendering engine scene comprises the following steps:
extending a rendering system of the rendering engine, such that a rendering result obtained in the step S2 is imported into the entire rendering process of the rendering engine;
extending nDisplay to enable the nDisplay to support rendering of different scenes and to enable the nDisplay to perform distributed forwarding of reconstruction data information and the new view angle of the neural radiance field; wherein the nDisplay is a multi-screen projection technology plug-in based on the rendering;
extending Composite to enable the Composite to perform image layered overlay or high-order lighting and occlusion processing; wherein the Composite is a multi-layer overlay synthesis rendering plug-in based on the rendering;
establishing a management module ANeRFActor to complete the following functions: forwarding original image data to a neural radiance field reconstruction module; then, forwarding the rendering result to the rendering engine or the nDisplay to distribute to child nodes; wherein the management module ANeRFActor includes a media component, receives the image through the media component, and sends the image to the neural radiance field reconstruction module to reconstruct the implicit representation model; and finally, distributing representation model data through the nDisplay, wherein the neural radiance field reconstruction module is a module for reconstructing the three-dimensional object or scene by using the neural radiance field, and the representation model data is data of an actual representation model of the three-dimensional object or scene.

4. The heterogeneous three-dimensional multi-object fusion rendering method according to claim 2, wherein in the step S42, synthesizing the image and the depth information rendered by the rendering engine with the image and the depth information rendered by the neural radiance field comprises the following substeps:
during synthesis, comparing the depth information rendered by the rendering engine with the depth information obtained by the rendering of the neural radiance field, and selecting a point closer to a virtual camera in front of the field of view; and synthesizing a final image through layered overlay of the images as an output.

5. A heterogeneous three-dimensional multi-object fusion rendering device, comprising a processor and a memory, wherein the memory stores a computer program which, when executed by the processor, causes the processor to perform the method according to any one of claims 1 to 4.

6. A heterogeneous three-dimensional multi-object fusion rendering system, comprising the heterogeneous three-dimensional multi-object fusion rendering device according to claim 5.

## Patentansprüche

1. Heterogenes dreidimensionales Multiobjekt-Fusions-Rendering-Verfahren, umfassend die folgenden Schritte:
S1. Rekonstruktion eines neuronalen Strahlendichtefelds (neural radiance field): Durchführen einer impliziten Darstellung einer dreidimensionalen Szene oder eines dreidimensionalen Objekts unter Verwendung eines neuronalen Strahlendichtefelds, um ein implizites Darstellungsmodell und ein entsprechendes grobes geometrisches Modell zu erhalten;
S2. Rendering des neuronalen Strahlendichtefelds: Importieren des impliziten Darstellungsmodells in einen Renderer für neuronale Strahlendichtefelder zum Rendering, um einen neuen Blickwinkel unter einer gegebenen Kamerapose zu erhalten, wobei der Renderer für neuronale Strahlendichtefelder ein Modul ist, das das implizite Darstellungsmodell unter Verwendung des durch das neuronale Strahlendichtefeld rekonstruierten dreidimensionalen Objekts oder der dreidimensionalen Szene erhält und dann das implizite Darstellungsmodell in einem volumenbasierten Rendering (volume-based rendering) rendert;
S3. Rendering: Importieren des groben geometrischen Modells in eine Rendering-Engine und Erzeugen eines Schattens des geometrischen Modells in einer Rendering-Szene;
S4. Multiobjekt-Szenensynthese: Synthetisieren eines in der Rendering-Engine gerenderten Bildes und eines durch das neuronale Strahlendichtefeld gerenderten Bildes; wobei:
∘ im Schritt S1 das Durchführen einer impliziten Darstellung einer dreidimensionalen Szene oder eines dreidimensionalen Objekts unter Verwendung eines neuronalen Strahlendichtefelds, um ein implizites Darstellungsmodell und ein entsprechendes grobes geometrisches Modell zu erhalten, die folgenden Teilschritte umfasst:
▪ für ein vereinheitlichtes reales dreidimensionales Objekt oder eine vereinheitlichte reale dreidimensionale Szene, Aufnehmen von Fotos unter einer Vielzahl von Winkeln, um mehrere Ansichten zu erhalten;
▪ dann Erhalten eines impliziten Darstellungsmodells des dreidimensionalen Objekts oder der dreidimensionalen Szene durch Optimieren des Netzwerks des neuronalen Strahlendichtefelds;
▪ schließlich Ableiten einer expliziten Darstellungsdatei des dreidimensionalen Objekts oder der dreidimensionalen Szene als ein grobes geometrisches Modell durch einen Nachbearbeitungsalgorithmus, wobei die Optimierung des neuronalen Strahlendichtefelds durch Optimieren eines neuronalen Netzwerks zur Darstellung des dreidimensionalen Objekts oder der dreidimensionalen Szene durch Rückwärtspropagierung (back propagation) erreicht wird;
∘ im Schritt S2 das Importieren des impliziten Darstellungsmodells in einen Renderer für neuronale Strahlendichtefelder zum Rendering, um einen neuen Blickwinkel unter einer gegebenen Kamerapose zu erhalten, die folgenden Teilschritte umfasst:
▪ Berechnen von Startkoordinaten und einer Lichtrichtung, die für das Rendering des neuronalen Strahlendichtefelds erforderlich sind, gemäß einer relativen Pose der im Schritt S1 abgeleiteten Darstellungsdatei des dreidimensionalen Objekts oder der dreidimensionalen Szene in der gesamten virtuellen Szene der Rendering-Engine und der Pose der Kamera in der virtuellen Szene der Rendering-Engine;
▪ und dann Erhalten von entsprechenden Bild- und Tiefeninformationen gemäß den Startkoordinaten und der Lichtrichtung,
**dadurch gekennzeichnet, dass**
der Schritt S3, das Importieren des groben geometrischen Modells in eine Rendering-Engine und das Erzeugen eines Schattens des geometrischen Modells in einer gerenderten Szene die folgenden Teilschritte umfasst:
∘ Einstellen der Szene und der Beleuchtung in der Rendering-Engine;
∘ Importieren des durch das neuronale Strahlendichtefeld erzeugten groben geometrischen Modells in die Rendering-Engine-Szene;
∘ dann Erzeugen des Schattens des geometrischen Modells in der Rendering-Engine-Szene unter Verwendung des Rendering-Modus der Rendering-Engine;
∘ und schließlich Ausblenden des durch das neuronale Strahlendichtefeld erzeugten geometrischen Modells, wobei der Rendering-Modus ein Rasterisierungs-Rendering-Modus (rasterization rendering mode) ist.

2. Heterogenes dreidimensionales Multiobjekt-Fusions-Rendering-Verfahren nach Anspruch 1, wobei im Schritt S4 das Synthetisieren eines in der Rendering-Engine gerenderten Bildes und eines durch das neuronale Strahlendichtefeld gerenderten Bildes die folgenden Teilschritte umfasst:
S41. Importieren des neuen Blickwinkels des dreidimensionalen Objekts oder der dreidimensionalen Szene, der beim Rendering des neuronalen Strahlendichtefelds im Schritt S2 erzeugt wurde, in die Rendering-Engine-Szene;
S42. Synthetisieren des Bildes und der Tiefeninformationen, die durch die Rendering-Engine gerendert wurden, mit dem Bild und den Tiefeninformationen, die durch das neuronale Strahlendichtefeld gerendert wurden; und
S43. Durchführen einer Farbanpassung und einer Farbraumkonvertierung an der gesamten Szene und dem dreidimensionalen Objekt oder der dreidimensionalen Szene beim Rendering der Rendering-Engine.

3. Heterogenes dreidimensionales Multiobjekt-Fusions-Rendering-Verfahren nach Anspruch 2, wobei:
im Schritt S41 das Importieren des neuen Blickwinkels des dreidimensionalen Objekts oder der dreidimensionalen Szene, der beim Rendering des neuronalen Strahlendichtefelds im Schritt S2 erzeugt wurde, in die Rendering-Engine-Szene die folgenden Schritte umfasst:
∘ Erweitern eines Rendering-Systems der Rendering-Engine, so dass ein im Schritt S2 erhaltenes Rendering-Ergebnis in den gesamten Rendering-Prozess der Rendering-Engine importiert wird;
∘ Erweitern von nDisplay, um zu ermöglichen, dass das nDisplay das Rendering verschiedener Szenen unterstützt, und um zu ermöglichen, dass das nDisplay eine verteilte Weiterleitung von Rekonstruktionsdateninformationen und des neuen Blickwinkels des neuronalen Strahlendichtefelds durchführt; wobei das nDisplay ein auf dem Rendering basierendes Multi-Bildschirm-Projektionstechnologie-Plug-In (multi-screen projection technology plug-in) ist;
∘ Erweitern von Composite, um zu ermöglichen, dass das Composite eine schichtweise Bildüberlagerung (image layered overlay) oder eine Beleuchtungs- und Verdeckungsverarbeitung höherer Ordnung (high-order lighting and occlusion processing) durchführt; wobei das Composite ein auf dem Rendering basierendes Mehrschicht-Überlagerungssynthese-Rendering-Plug-In (multi-layer overlay synthesis rendering plug-in) ist;
∘ Einrichten eines Verwaltungsmoduls ANeRFactor, um die folgenden Funktionen auszuführen:
▪ Weiterleiten von Originalbilddaten an ein Rekonstruktionsmodul für neuronale Strahlendichtefelder;
▪ dann Weiterleiten des Rendering-Ergebnisses an die Rendering-Engine oder das nDisplay zur Verteilung an Kindknoten (child nodes);
▪ wobei das Verwaltungsmodul ANeRFactor eine Medienkomponente enthält, das Bild über die Medienkomponente empfängt und das Bild an das Rekonstruktionsmodul für neuronale Strahlendichtefelder sendet, um das implizite Darstellungsmodell zu rekonstruieren;
▪ und schließlich Verteilen von Darstellungsmodelldaten über das nDisplay, wobei das Rekonstruktionsmodul für neuronale Strahlendichtefelder ein Modul zum Rekonstruieren des dreidimensionalen Objekts oder der dreidimensionalen Szene unter Verwendung des neuronalen Strahlendichtefelds ist und die Darstellungsmodelldaten Daten eines tatsächlichen Darstellungsmodells des dreidimensionalen Objekts oder der dreidimensionalen Szene sind.
▪

4. Heterogenes dreidimensionales Multiobjekt-Fusions-Rendering-Verfahren nach Anspruch 2, wobei im Schritt S42 das Synthetisieren des Bildes und der Tiefeninformationen, die durch die Rendering-Engine gerendert wurden, mit dem Bild und den Tiefeninformationen, die durch das neuronale Strahlendichtefeld gerendert wurden, die folgenden Teilschritte umfasst:
während der Synthese, Vergleichen der durch die Rendering-Engine gerenderten Tiefeninformationen mit den durch das Rendering des neuronalen Strahlendichtefelds erhaltenen Tiefeninformationen und Auswählen eines Punktes, der näher an einer virtuellen Kamera vor dem Sichtfeld liegt; und Synthetisieren eines endgültigen Bildes durch schichtweise Überlagerung der Bilder als eine Ausgabe.

5. Heterogene dreidimensionale Multiobjekt-Fusions-Rendering-Vorrichtung, umfassend einen Prozessor und einen Speicher, wobei der Speicher ein Computerprogramm speichert, das, wenn es von dem Prozessor ausgeführt wird, den Prozessor veranlasst, das Verfahren nach einem der Ansprüche 1 bis 4 durchzuführen.

6. Heterogenes dreidimensionales Multiobjekt-Fusions-Rendering-System, umfassend die heterogene dreidimensionale Multiobjekt-Fusions-Rendering-Vorrichtung nach Anspruch 5.

## Revendications

1. Procédé hétérogène de rendu par fusion multi-objets en trois dimensions, comprenant les étapes suivantes:
S1. Reconstruction de champ de radiance neuronal: effectuer une représentation implicite sur une scène ou un objet tridimensionnel en utilisant un champ de radiance neuronal pour obtenir un modèle de représentation implicite et un modèle géométrique approximatif correspondant ;
S2. Rendu de champ de radiance neuronal : importer le modèle de représentation implicite dans un moteur de rendu de champ de radiance neuronal pour le rendu afin d'obtenir un nouvel angle de vue sous une pose de caméra donnée, dans lequel le moteur de rendu de champ de radiance neuronal est un module qui obtient le modèle de représentation implicite en utilisant l'objet ou la scène tridimensionnel(le) reconstruit(e) par le champ de radiance neuronal, puis effectue le rendu du modèle de représentation implicite par un rendu volumique ;
S3. Rendu : importer le modèle géométrique approximatif dans un moteur de rendu, et générer une ombre du modèle géométrique dans une scène de rendu ;
S4. Synthèse de scène multi-objets: synthétiser une image rendue dans le moteur de rendu et une image rendue par le champ de radiance neuronal; dans lequel:
∘ à l'étape S1, l'exécution d'une représentation implicite sur une scène ou un objet tridimensionnel en utilisant un champ de radiance neuronal pour obtenir un modèle de représentation implicite et un modèle géométrique approximatif correspondant comprend les sous-étapes suivantes :
▪ pour un objet ou une scène tridimensionnel(le) réel(le) unifié(e), prendre des photos sous une pluralité d'angles pour obtenir de multiples vues ;
▪ puis obtenir un modèle de représentation implicite de l'objet ou de la scène tridimensionnel(le) en optimisant le réseau du champ de radiance neuronal;
▪ enfin, dériver un fichier de représentation explicite de l'objet ou de la scène tridimensionnel(le) en tant que modèle géométrique approximatif par un algorithme de post-traitement, dans lequel l'optimisation du champ de radiance neuronal est réalisée en optimisant un réseau neuronal pour représenter l'objet ou la scène tridimensionnel(le) par rétropropagation (back propagation);
∘ à l'étape S2, l'importation du modèle de représentation implicite dans un moteur de rendu de champ de radiance neuronal pour le rendu afin d'obtenir un nouvel angle de vue sous une pose de caméra donnée comprend les sous-étapes suivantes:
▪ calculer des coordonnées de départ et une direction de la lumière requises par le rendu du champ de radiance neuronal selon une pose relative du fichier de représentation d'affichage de l'objet ou de la scène tridimensionnel(le) dérivé à l'étape S1 dans la scène virtuelle entière du moteur de rendu et la pose de la caméra dans la scène virtuelle du moteur de rendu;
▪ et puis obtenir des informations d'image et de profondeur correspondantes selon les coordonnées de départ et la direction de la lumière,
**caractérisé en ce que**
l'étape S3, l'importation du modèle géométrique approximatif dans un moteur de rendu et la génération d'une ombre du modèle géométrique dans une scène rendue comprennent les sous-étapes suivantes :
∘ régler la scène et l'éclairage dans le moteur de rendu ;
∘ importer le modèle géométrique approximatif généré par le champ de radiance neuronal dans la scène du moteur de rendu ;
∘ puis produire l'ombre du modèle géométrique dans la scène du moteur de rendu en utilisant le mode de rendu du moteur de rendu ;
∘ et enfin masquer le modèle géométrique généré par le champ de radiance neuronal, dans lequel le mode de rendu est un mode de rendu par rastérisation.
∘

2. Procédé hétérogène de rendu par fusion multi-objets en trois dimensions selon la revendication 1, dans lequel à l'étape S4, la synthèse d'une image rendue dans le moteur de rendu et d'une image rendue par le champ de radiance neuronal comprend les sous-étapes suivantes :
S41. Importer le nouvel angle de vue de l'objet ou de la scène tridimensionnel(le) généré lors du rendu du champ de radiance neuronal à l'étape S2 dans la scène du moteur de rendu ;
S42. Synthétiser l'image et les informations de profondeur rendues par le moteur de rendu avec l'image et les informations de profondeur rendues par le champ de radiance neuronal; et
S43. Effectuer un ajustement de couleur et une conversion d'espace colorimétrique sur la scène entière et l'objet ou la scène tridimensionnel(le) dans le rendu du moteur de rendu.

3. Procédé hétérogène de rendu par fusion multi-objets en trois dimensions selon la revendication 2, dans lequel:
à l'étape S41, l'importation du nouvel angle de vue de l'objet ou de la scène tridimensionnel(le) généré lors du rendu du champ de radiance neuronal à l'étape S2 dans la scène du moteur de rendu comprend les étapes suivantes :
∘ étendre un système de rendu du moteur de rendu, de sorte qu'un résultat de rendu obtenu à l'étape S2 soit importé dans l'ensemble du processus de rendu du moteur de rendu ;
∘ étendre nDisplay pour permettre à nDisplay de prendre en charge le rendu de différentes scènes et pour permettre à nDisplay d'effectuer une transmission distribuée des informations de données de reconstruction et du nouvel angle de vue du champ de radiance neuronal; dans lequel le nDisplay est un plug-in de technologie de projection multi-écrans (multi-screen projection technology plug-in) basé sur le rendu ;
∘ étendre Composite pour permettre à Composite d'effectuer une superposition d'images en couches (image layered overlay) ou un traitement d'éclairage et d'occlusion d'ordre supérieur (high-order lighting and occlusion processing) ; dans lequel le Composite est un plug-in de rendu de synthèse par superposition multicouche (multi-layer overlay synthesis rendering plug-in) basé sur le rendu ;
∘ établir un module de gestion ANeRFActor pour accomplir les fonctions suivantes :
▪ transmettre des données d'image originales à un module de reconstruction de champ de radiance neuronal;
▪ puis transmettre le résultat du rendu au moteur de rendu ou au nDisplay pour le distribuer aux nœuds enfants (child nodes);
▪ dans lequel le module de gestion ANeRFActor inclut un composant multimédia, reçoit l'image par le composant multimédia, et envoie l'image au module de reconstruction de champ de radiance neuronal pour reconstruire le modèle de représentation implicite ;
▪ et enfin, distribuer des données de modèle de représentation par le nDisplay, dans lequel le module de reconstruction de champ de radiance neuronal est un module pour reconstruire l'objet ou la scène tridimensionnel(le) en utilisant le champ de radiance neuronal, et les données de modèle de représentation sont des données d'un modèle de représentation réel de l'objet ou de la scène tridimensionnel.

4. Procédé hétérogène de rendu par fusion multi-objets en trois dimensions selon la revendication 2, dans lequel à l'étape S42, la synthèse de l'image et des informations de profondeur rendues par le moteur de rendu avec l'image et les informations de profondeur rendues par le champ de radiance neuronal comprend les sous-étapes suivantes :
pendant la synthèse, comparer les informations de profondeur rendues par le moteur de rendu avec les informations de profondeur obtenues par le rendu du champ de radiance neuronal, et sélectionner un point plus proche d'une caméra virtuelle devant le champ de vision; et synthétiser une image finale par une superposition en couches des images en tant que sortie.

5. Dispositif hétérogène de rendu par fusion multi-objets en trois dimensions, comprenant un processeur et une mémoire, dans lequel la mémoire stocke un programme informatique qui, lorsqu'il est exécuté par le processeur, amène le processeur à mettre en œuvre le procédé selon l'une quelconque des revendications 1 à 4.

6. Système hétérogène de rendu par fusion multi-objets en trois dimensions, comprenant le dispositif hétérogène de rendu par fusion multi-objets en trois dimensions selon la revendication 5.
